# EUROPÄISCHE PATENTSCHRIFT

(11) **EP 2 158 113 B1**
(45) Veröffentlichungstag und Bekanntmachung des Hinweises auf die Patenterteilung: **14.08.2013**
(21) Anmeldenummer: 08760033.4
(22) Anmeldetag: 27.05.2008
(51) Int. Cl.: B60T 8/36

(54) **HYDRAULIKAGGREGAT FÜR SCHLUPFGEREGELTE BREMSANLAGEN**
HYDRAULIC UNIT FOR SLIP-CONTROLLED BRAKE SYSTEMS
UNITÉ HYDRAULIQUE POUR SYSTÈMES DE FREINAGE À DISPOSITIF ANTI-PATINAGE

(30) Priorität: 13.06.2007 DE 102007027236; 08.11.2007 DE 102007053174
(43) Veröffentlichungstag der Anmeldung: 03.03.2010
(73) Patentinhaber: Continental Teves AG & Co. OHG, 60488 Frankfurt (DE)
(72) Erfinder: VOGEL, Günther, 63303 Dreieich (DE); FISCHBACH-BORAZIO, Petra, 60488 Frankfurt am Main (DE); HINZ, Axel, 61267 Neu-Anspach (DE); GREIFF, Uwe, 61352 Bad Homburg (DE); GASTAUER, Heiko, 66679 Losheim am See (DE)
(86) Internationale Anmeldenummer: PCT/EP2008/056434
(87) Internationale Veröffentlichungsnummer: WO 2008/151919

(56) Entgegenhaltungen:
- WO-A-99/25594
- WO-A-2004/048173
- WO-A-2004/113142
- DE-A1- 10 237 163
- DE-B3- 10 302 681

## Beschreibung

Die Erfindung betrifft ein Hydraulikaggregat für schlupfgeregelte Bremsanlagen nach dem Oberbegriff des Patentanspruchs 1.

Aus der WO 99/25594 A1 ist bereits ein Hydraulikaggregat für eine schlupfgeregelte Bremsanlage bekannt geworden, in dessen Aufnahmekörper mehrere Ventilaufnahmebohrungen in einer ersten, zweiten und dritten Ventilreihe eingebracht sind, die Ein-, Auslass-, Trenn- und elektrische Umschaltventile aufnehmen. Außerhalb zur ersten und zweiten Ventilreihe ist im blockförmigen Aufnahmekörper eine Pumpenbohrung angeordnet, die quer zur Einmündungsrichtung der Ventilaufnahmebohrungen in den Aufnahmekörper ausgerichtet ist. Ferner befindet sich außerhalb zu den beiden Ventilreihen im Aufnahmekörper eine Motoraufnahmebohrung, die senkrecht in die Pumpenbohrung gerichtet ist. Die Pumpen- als auch die Motoraufnahmebohrung befindet sich somit zwischen der die Auslassventile aufnehmenden zweiten Ventilreihe und der dritten Ventilreihe, welche die Trenn- und elektrischen Umschaltventile aufweist. Ferner befinden sich zwischen der zweiten und dritten Ventilreihe weitere Aufnahmebohrungen für zwei Niederdruckspeicher.

Das beschriebene Hydraulikaggregat erfordert ein entsprechend großes Bauvolumen, da der relativ groß bauende Niederdruckspeicher zwischen den Ventilreihen angeordnet ist. Dies führt außerdem im Falle einer Fahrdynamikregelung zu einem langen Ansaugweg der Pumpe über das in der dritten Ventilreihe angeordnete Umschaltventil, da sich die dritte Ventilreihe infolge des großen Niederdruckspeichers weit entfernt vom Bremsdruckgeberanschluss befindet. Ein weiterer Nachteil ist darin zu sehen, dass innerhalb des Aufnahmekörpers kein Freiraum zur Anordnung weiterer Aufnahmebohrungen, insbesondere zur Aufnahme eines Drucksensors verbleibt.

Ein Hydraulikaggregat der gattungsbildenden Art ist bereits aus DE 102 37 163 A1 bekannt. Dieses Hydraulikaggregat weist in einem Aufnahmekörper eine für eine Pumpe vorgesehene Pumpenaufnahmebohrung auf, die quer sowie außerhalb zu mehreren Ventilaufnahmebohrungen einer ersten und zweiten Ventilreihe in den Aufnahmekörper einmündet. Weiterhin ist eine zur Aufnahme eines elektrischen Umschaltventils vorgesehene Ventilaufnahmebohrung achsparallel zu den Ventilaufnahmebohrungen der ersten und zweiten Ventilreihe in der Ebene der Pumpenaufnahmebohrung angeordnet, sodass über die für das Umschaltventil vorgesehene Ventilaufnahmebohrung ein in den Aufnahmekörper einmündender Bremsdruckgeberanschluss mit der Saugseite der Pumpe hydraulisch verbindbar ist. Ferner münden auf der vom Bremsdruckgeberanschluss entgegengesetzten Seite des Aufnahmekörpers zwei Speicheraufnahmebohrungen ein, die quer zu den beiden Ventilreihen, der Pumpenaufnahmebohrung als auch zu zwei weiteren, für zwei Trennventile vorgesehene Ventilaufnahmebohrungen im Aufnahmekörper ausgerichtet sind. Die Anordnung von wenigstens einer weiteren Aufnahmebohrung im Aufnahmekörper, welche die Aufnahme eines Drucksensors ermöglicht, ist nicht vorgesehen.

Daher ist es die Aufgabe der vorliegenden Erfindung, ein Hydraulikaggregat der angegebenen Art derart zu verbessern, dass unter Einhaltung möglichst kleiner Gehäuseabmessungen die genannten Nachteile vermieden werden.

Diese Aufgabe wird erfindungsgemäß für ein Hydraulikaggregat der eingangs genannten Gattung durch die kennzeichnenden Merkmale des Patentanspruchs 1 gelöst.

Weitere Merkmale und Vorteile der Erfindung gehen im nachfolgenden aus der Beschreibung eines Beispieles zur Gestaltung eines Hydraulikaggregats anhand mehrerer Zeichnungen hervor.

Es zeigen:
- Fig. 1: eine dreidimensionale Darstellung des erfindungsgemäßen Aufnahmekörpers zur Verdeutlichung des Anschlussbilds für die Bremsdruckgeber- und Radbremsanschlüsse und aller auf einer Oberseite des Aufnahmekörpers vorgesehenen Aufnahmebohrungen,
- Fig. 2: eine dreidimensionale Darstellung des erfindungsgemäßen Aufnahmekörpers nach Figur 1 in einer gedrehten Ansicht mit Blick auf die nach oben geklappte Unterseite des Aufnahmekörpers.

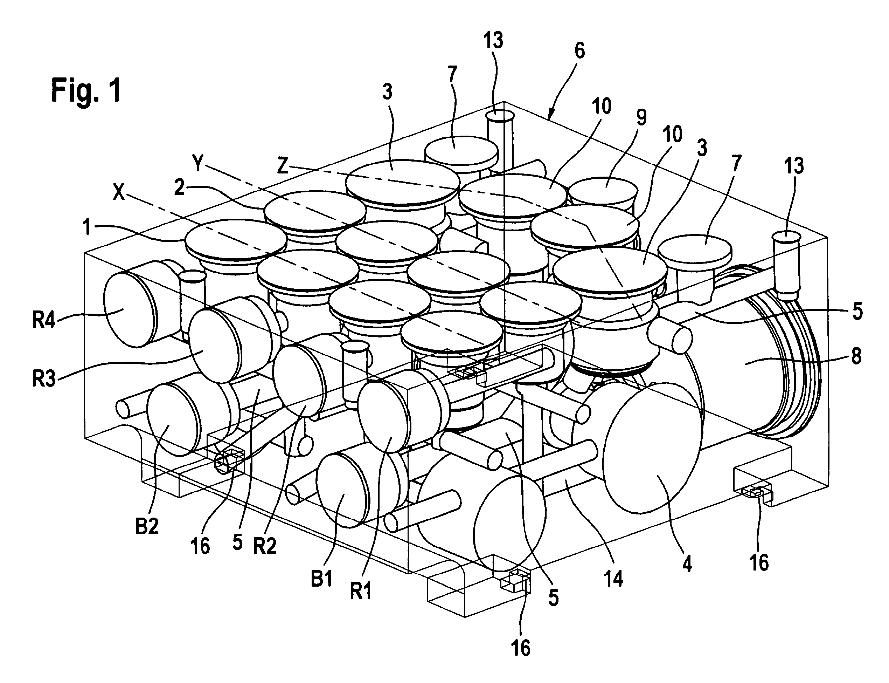

In der Abbildung nach Fig. 1 ist die Kontur des blockförmigen Aufnahmekörpers 6 zeigt. Die abbildungsgemäße Oberseite des Aufnahmekörpers 6 beinhaltet in einer ersten und zweiten Ventilreihe X, Y insgesamt acht Ventilaufnahmebohrungen 1, 2, in denen elektromagnetisch betätigbare Einlass- und Auslassventile für eine Kraftfahrzeug-Zweikreisbremsanlage eingesetzt werden. Neben und damit außerhalb zu den beiden Ventilreihen X, Y befindet sich in einer zu den Ventilaufnahmebohrungen 1, 2 tieferen Ebene im Aufnahmekörper 6 eine Pumpenaufnahmebohrung 4.

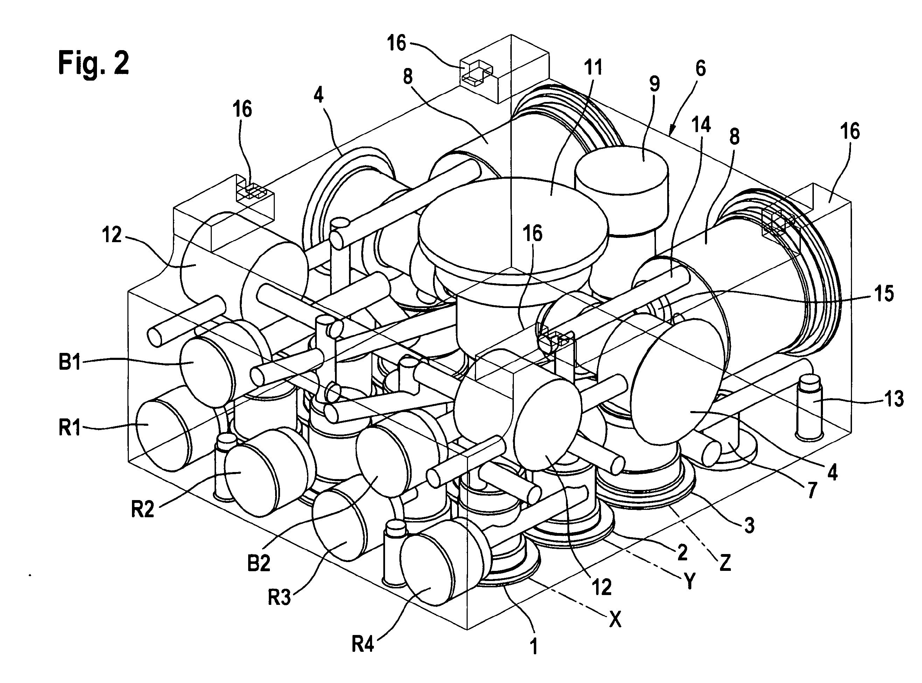

Aus entgegengesetzter Richtung zu den Einmündungen der Ventilaufnahmebohrungen 1, 2 in den Aufnahmekörper 6 erstreckt sich eine Motoraufnahmebohrung 11 abbildungsgemäß von der Unterseite des Aufnahmekörpers 6 lotrecht in die Pumpenaufnahmebohrung 4. Die von unten auf die Pumpenaufnahmebohrung 4 gerichtete Motoraufnahmebohrung 11 nimmt nicht nur den zum Antrieb einer Pumpe in der Pumpenaufnahmebohrung 4 erforderlichen Elektromotor, sondern auch den für eine Radialkolbenpumpe erforderlichen Exzenter- oder Kurbelantrieb auf. Bezüglich der zur Unterseite erläuterten Einzelheiten wird auf die Darstellung in Figur 2 verwiesen.

Die Ventilaufnahmebohrungen 1, 2 und die Motoraufnahmebohrung 11 sind somit achsparallel zueinander als Sackbohrungen von der Ober- und Unterseite des Aufnahmekörpers 6 automatengerecht herstellbar. Die unmittelbar neben der Pumpenaufnahmebohrung 4 gelegene zweite Ventilreihe Y nimmt ausschließlich die für den Bremsdruckabbau in den Radbremsen erforderlichen Auslassventile auf. Durch diese Anordnung ergibt sich eine besonders kurze Druckmittelverbindung von den Auslassventilen zum saugseitigen Anschluss an der Pumpenaufnahmebohrung 4 über jeweils eine der die Niederdruckspeicherkolben aufweisenden beiden Speicheraufnahmebohrungen 8, die quer zu den Ventilreihen X, Y, in die hintere Seitenfläche des Aufnahmekörpers 6 einmünden und die über Druckmittelkanäle mit den Ventilaufnahmebohrungen 2 der zweiten Ventilreihe Y verbunden sind.

Die Einlassventile befinden sich ausschließlich in den Ventilaufnahmebohrungen 1 der ersten Ventilreihe X, die durch die zweite Ventilreihe Y von der Vertikalebene des Aufnahmekörpers 6 entfernt sind, welche die Pumpenaufnahmebohrung 4 aufweist. Die in der Nähe der ersten Ventilreihe X und zwar an der abgebildeten Vorderseite des Aufnahmekörper 6 einmündenden Bremsdruckgeberanschlüsse B1, B2, sind ebenso wie die Radbremsanschlüsse R1, R2, R3, R4 auf der Vorderseite des Aufnahmekörpers 6 angeordnet, womit sich ein einheitliches Anschlussbild für die Bremsleitungen im Bereich der Vorderseite des kompakt bauenden Aufnahmekörpers 6 ergibt.

Aus der Fig. 1 geht ferner eine dritte Ventilreihe Z hervor, deren Ventilaufnahmebohrungen 3, 10 in einer bogenförmigen Reihenanordnung beabstandet von der ersten und zweiten Ventilreihe X, Y gleichfalls wie die Ventilaufnahmebohrungen 1, 2 der ersten und zweiten Ventilreihe X, Y achsparallel in die Oberseite des Aufnahmekörpers 6 einmünden. Diese dritte Ventilreihe Z gewährleistet eine einfache funktionelle Erweiterung des für Blockierdruckregelung ausgelegten Hydraulikaggregates zum Zwecke einer Antriebsschlupf- bzw. Fahrdynamikregelung, wozu in den beiden äußeren Ventilaufnahmebohrungen 3 der dritten Ventilreihe Z als elektrische Umschaltventile ausgeführte, in Grundstellung geschlossene Magnetventile eingesetzt sind, die im Antriebsschlupf- oder Fahrdynamikbetrieb eine direkte hydraulische Verbindung der Pumpensaugseite mit dem an den Bremsdruckgeberanschlüssen B1, B2 anschließbaren Tandemhauptbremszylinder herstellen. In den beiden dazwischenliegenden Ventilaufnahmebohrungen 10 der Ventilreihe Z werden zwei in Grundstellung geöffnete Magnetventile eingesetzt, die sich schaltungstechnisch zwischen den zu den Bremsdruckgeberanschlüssen B1, B2 und zu den Ventilaufnahmebohrungen 1 der ersten Ventilreihe X führenden Kanälen befinden. Diese Trennventile nehmen zur Antriebsschlupf- oder Fahrdynamikregelung ihre elektromagnetisch geschlossene Schaltstellung ein, sodass das von der Pumpe über die offenen Umschaltventile aus dem Vorratsbehälter des Tandemhauptzylinder angesaugte Druckmittel nicht über den Tandemhauptzylinder zum drucklosen Vorratsbehälter wieder zurückgefördert werden kann.

Die für die elektrischen Umschaltventile vorgesehenen Ventilaufnahmebohrungen 3 sind über ihre Mantelflächen an einem Druckmittelkanal 5 angeschlossen, der gemäß Figur 1 unterhalb zu den Ventilreihen X, Y zum Bremsdruckgeberanschluss B1 bzw. B2 eines jeden Bremskreises führt.

Weiterhin sieht die vorteilhaft gestaltete Blockverbohrung vor, dass neben der Pumpenaufnahmebohrung 4 ein paar koaxial zueinander ausgerichtete Geräuschdämpfungskammern 12 angeordnet sind, die gemäß Figur 1 unterhalb der in den ersten und zweiten Ventilreihen Y angeordneten Ventilaufnahmebohrungen 1, 2 als Sackbohrungen von beiden diametralen Seiten in den Aufnahmekörper 6 einmünden. Die beiden Geräuschdämpfungskammern 12 stehen mit den druckseitigen Anschlüssen der Pumpenaufnahmebohrung 4 und den Ventilaufnahmebohrungen 1 der ersten Ventilreihe X in Verbindung.

Entfernt von der ersten und zweiten Ventilreihe X, Y befindet sich unmittelbar neben der dritten Ventilreihe Z ferner ein Durchgang 9, um die Stromversorgung zwischen einem auf der Oberseite des Aufnahmekörpers 6 aufsetzbaren Steuergeräts und dem an der Unterseite des Aufnahmekörpers 6 angeordneten Elektromotors zum Antrieb der Pumpe zu gewährleisten. An den Ecken des Aufnahmekörpers 6 sind Gewindelöcher 13 zur Befestigung eines die Oberseite des Aufnahmekörpers 6 verschließenden Deckels vorgesehen, der ein elektronisches Steuergerät beinhaltet. Der Deckel ist entlang seiner auf den Aufnahmekörper 6 aufzusetzenden Kontaktfläche abgedichtet, wozu sich bevorzugt eine umlaufende Dichtung eignet, die entweder am Deckel angespritzt oder in einer Deckelnut gehalten ist.

Wie bereits erwähnt, nimmt die Vorderseite des Aufnahmekörpers 6 sämtliche Radbremsanschlüsse R1, R2, R3, R4 auf, die mit den Vorderrad- und Hinterradbremsen eines Kraftwagens verbindbar sind. Diese Radbremsanschlüsse R1, R2, R3, R4 stehen über kurze Druckmittelkanäle mit den Ventilaufnahmebohrungen 1 der ersten Ventilreihe X und über die darin in Grundstellung geöffneten Einlassventile mit den Bremsdruckgeberanschlüssen B1, B2 in Verbindung, die gleichfalls bauraumoptimiert an der Vorderseite des Aufnahmekörpers 6 einmünden.

Um das von den Bremsdruckgeberanschlüssen B1, B2 über die erste Ventilreihe X den Radbremsen R1-R4 zuführbare Bremsflüssigkeitsvolumen in Richtung der beiden Speicheraufnahmebohrung 8 ablassen zu können, befindet sich zwischen jeder Ventilaufnahmebohrung 1, 2 der ersten und zweiten Ventilreihe X,Y ein kurzer, horizontaler Druckmittelkanal, der sich über einen Verbindungskanal 14 in der geöffneten Stellung des zugehörigen Auslassventils jeweils unterhalb der Pumpenaufnahmebohrung 4 zur Speicheraufnahmebohrung 8 fortsetzt.

Die Figur 2 zeigt den Aufnahmekörper 6 nach Figur 1 in einer um die Horizontalachse gedrehten Ansicht mit Blick auf die nach oben gedrehte Unterseite des Aufnahmekörpers 6. Gut ersichtlich ist hierbei die Motoraufnahmebohrung 11, welche zur Aufnahme eines Exzenterantriebs die für eine Radialkolbenpumpe vorgesehene Pumpenaufnahmebohrung 4 auf halber Länge durchdringt.

Ferner geht hierzu aus der Figur 2 hervor, dass in der Offenstellung des jeweils in der zweiten Ventilreihe Y befindlichen, elektromagnetisch angesteuerten Auslassventils das in der Ventilaufnahmebohrung 2 der zweiten Ventilreihe Y anstehende Druckmittel in den als Sammelkanal ausgebildeten horizontalen Druckmittelkanal gelangt, der für jeden Bremskreis über den Verbindungskanal 14 zur Speicheraufnahmebohrung 8 führt. Jede der beiden parallel angeordneten Speicheraufnahmebohrungen 8 weist abbildungsgemäß einen horizontal im Aufnahmekörper 6 verlaufenden Rücklaufkanal mit einem Druckrückhalteventil 15 auf, der in den saugseitigen Bereich der Pumpenaufnahmebohrung 4 einmündet.

Wie besonders deutlich aus Figur 1 hervorgeht, ist zur kompakten Bauweise des Hydraulikaggregats die zur Aufnahme des elektrischen Umschaltventils vorgesehene Ventilaufnahmebohrung 3 jeweils in der Längsebene der Pumpenaufnahmebohrung 4 angeordnet, sodass nach Figur 1 die Ventilaufnahmebohrung 3 direkt oberhalb der Pumpenaufnahmebohrung 4 im Aufnahmekörper 6 integriert ist, womit sich ein widerstandsarmer Ansaugweg für die Pumpe ergibt.

Der Boden der Ventilaufnahmebohrung 3 steht somit innerhalb der Längsebene der Pumpenaufnahmebohrung 4 auf kürzester Entfernung mit dem saugseitigen Bereich der Pumpenbohrung 3 in Verbindung, während die Mantelfläche der zur Aufnahme des elektrischen Umschaltventils vorgesehenen Ventilaufnahmebohrung 3 über einen einfach herzustellenden Druckmittelkanal 5 jeweils mit dem zugehörigen Bremsdruckgeberanschluss B1, B2 verbunden ist, der quer zu den drei Ventilreihen X, Y, Z in den Aufnahmekörper 6 einmündet.

Durch die Anordnung der Ventilaufnahmebohrung 3 in Überdeckung mit der Pumpenaufnahmebohrung 4 verbleibt gemäß Fig. 1 oberhalb der Speicheraufnahmebohrung 8 ein hinreichend großer Freiraum im Aufnahmekörper 6 zur Anordnung eines für die Bremsdrucküberwachung zweckmäßigen Drucksensors, der somit vorteilhaft in einer oberhalb der Speicherbohrung 8 angeordneten Drucksensoraufnahmebohrung 7 befestigt wird. Wie aus Figur 1 ersichtlich ist, lässt sich die Drucksensoraufnahmebohrung 7 demnach äußerst kompakt in einem radialen Abstand zur Speicheraufnahmebohrung 8 in deren Längsebene anordnen, wobei zwecks einer unproblematischen hydraulischen Verbindung der Drucksensoraufnahmebohrung 7 mit dem Bremsdruckgeberanschluss B1, B2 die Drucksensoraufnahmebohrung 7 näherungsweise fluchtend in der Längsebene derjenigen Ventilaufnahmebohrungen 1, 2, 3 angeordnet sind, welche sich in den drei Ventilreihen X, Y, Z jeweils am äußeren Ende der Ventilreihen X, Y, Z befinden. Wie aus Figur 1 hervorgeht, ist die Drucksensoraufnahmebohrung 7 auf kürzestem Weg mit dem zum Bremsdruckgeberanschluss B1, B2 führenden Druckmittelkanal 5 verbunden, der in die Mantelfläche der Ventilaufnahmebohrung 3 einmündet, welche für das Umschaltventil vorgesehen ist.

Die zur Aufnahme des elektrischen Umschaltventils vorgesehene Ventilaufnahmebohrung 3 ist somit vorteilhaft zwischen der zweiten Ventilreihe Y und der Drucksensoraufnahmebohrung 7 bauraumoptimiert angeordnet, die achsparallel zu den Ventilaufnahmebohrungen der drei Ventilreihen X, Y, Z in den Aufnahmekörper 6 einmündet.

Das vorgestellte Hydraulikaggregat ist in vorliegendem Beispiel für eine Kraftwagen-Zweikreisbremsanlage konzipiert, mit den Merkmalen, dass zur individuellen Fahrdynamikregelung an allen Radbremsen die dritte Ventilreihe Z vier Ventilaufnahmebohrungen 3, 10 für zwei Trenn- sowie zwei Umschaltventile aufweist, wobei die für die beiden Trennventile vorgesehenen Ventilaufnahmebohrungen 10 zwischen den für die Umschaltventile vorgesehenen Ventilaufnahmebohrungen 3 angeordnet sind, die zur optimalen Ausnutzung des zu Verfügung stehenden Bauraums aus der Ventilreihe Z in Richtung der Pumpenaufnahmebohrung 4 versetzt sind.

Ferner sind zum Anschluss des Hydraulikaggregats an die Radbremsen alle vier Radbremsanschlüsse R1, R2, R3, R4 parallel in einer Reihe angeordnet, mit der Besonderheit, dass alle Radbremsanschlüsse parallel zu den beiden Bremsdruckgeberanschlüssen B1, B2 in eine Seitenfläche des Aufnahmekörpers 6 einmünden, welche die Bremsdruckgeberanschlüsse B1, B2 aufweist.

Wie aus Figur 2 ersichtlich ist, lässt sich das Umfangsmaß des blockförmigen Aufnahmekörpers 6 infolge der zuvor beschriebenen Anordnung sämtlicher Aufnahmebohrungen, Druckmittelkanäle, Rad- und Bremsanschlüsse soweit verkleinern, dass der in die Motoraufnahmebohrung 11 einzusetzende Elektromotor nahezu die gesamte Oberfläche des Aufnahmekörpers 6 bedeckt, sodass das Gehäuse des Elektromotors an den abgebildeten Befestigungsstellen 16 durch ein Verstemmen an der vier Außenkanten des Aufnahmekörpers 6 automatengerecht befestigt werden kann.

### Bezugszeichenliste

- 1: Ventilaufnahmebohrung
- 2: Ventilaufnahmebohrung
- 3: Ventilaufnahmebohrung
- 4: Pumpenaufnahmebohrung
- 5: Druckmittelkanal
- 6: Aufnahmekörper
- 7: Drucksensoraufnahmebohrung
- 8: Speicheraufnahmebohrung
- 9: Durchgang
- 10: Ventilaufnahmebohrung
- 11: Motoraufnahmebohrung
- 12: Geräuschdämpfungskammer
- 13: Gewindelöcher
- 14: Verbindungskanal
- 15: Druckrückhalteventil
- 16: Befestigungsstelle
- R1, R2: Radbremsanschlüsse
- R3, R4: Radbremsanschlüsse
- B1, B2: Bremsdruckgeberanschlüsse
- X, Y, Z: Ventilreihen

## Patentansprüche

1. Hydraulikaggregat für schlupfgeregelte Bremsanlagen,
- mit einem Aufnahmekörper (6), der in mehreren Ventilaufnahmebohrungen (1, 2) einer ersten und zweiten Ventilreihe (X, Y) Ein- und Auslaßventile aufnimmt,
- mit einer außerhalb zu den beiden Ventilreihen (X, Y) im Aufnahmekörper (6) angeordneten Pumpenaufnahmebohrung (4), die quer zur Einmündungsrichtung der Ventilaufnahmebohrungen (1, 2) in den Aufnahmekörper (6) gerichtet ist,
- mit einer außerhalb zu den beiden Ventilreihen (X, Y)im Aufnahmekörper (6) angeordneten Motoraufnahmebohrung (11), die senkrecht auf die Pumpenaufnahmebohrung (4) gerichtet ist,
- mit einer außerhalb zu den beiden Ventilreihen (X, Y) in den Aufnahmekörper (6) einmündenden Speicheraufnahmebohrung (8),
- mit mehreren die Ventile-, Pumpen- und Speicheraufnahmebohrungen (1, 2, 4, 8) verbindenden
Druckmittelkanälen (5, 14), die eine hydraulische Verbindung zwischen Bremsdruckgeberanschlüssen (B1,
B2) und mehreren Radbremsanschlüssen (R1, R2, R3, R4) herzustellen vermögen,
- sowie mit mehreren, in einer dritten Ventilreihe (Z) angeordneten Ventilaufnahmebohrungen (3) zur Aufnahme eines Trennventils und eines elektrischen Umschaltventils, das zwischen einem der Bremsdruckgeberanschlüssen (B1, B2) und der Saugseite einer Pumpe angeordnet ist, wobei die zur Aufnahme des elektrischen Umschaltventils vorgesehene Ventilaufnahmebohrung (3) in der Ebene der Pumpenaufnahmebohrung (4) angeordnet ist,
**dadurch gekennzeichnet, dass** die zur Aufnahme des elektrischen Umschaltventils vorgesehene Ventilaufnahmebohrung (3) zwischen der zweiten Ventilreihe (Y) und einer Drucksensoraufnahmebohrung (7) angeordnet ist, die achsparallel zu den Ventilaufnahmebohrungen der drei Ventilreihen (X, Y, Z) in den Aufnahmekörper (6) einmündet, und dass die Drucksensoraufnahmebohrung (7) fluchtend in der Ebene derjenigen Ventilaufnahmebohrungen (1, 2, 3) angeordnet sind, welche sich in den drei Ventilreihen (X, Y, Z) jeweils am äußeren Ende der Ventilreihen (X, Y, Z) befinden.

2. Hydraulikaggregat nach Anspruch 1, **dadurch gekennzeichnet, dass** der Boden der zur Aufnahme des elektrischen Umschaltventils vorgesehenen Ventilaufnahmebohrung (3) innerhalb der Ebene der Pumpenaufnahmebohrung (4) eine hydraulische Verbindung mit dem saugseitigen Bereich der Pumpenaufnahmebohrung (3) aufweist.

3. Hydraulikaggregat nach Anspruch 1 oder 2, **dadurch gekennzeichnet, dass** die Mantelfläche der zur Aufnahme des elektrischen Umschaltventils vorgesehenen Ventilaufnahmebohrung (3) über einen Druckmittelkanal (5) mit dem Bremsdruckgeberanschluss (B1, B2) verbunden ist, der quer zu den drei Ventilreihen (X, Y, Z) in den Aufnahmekörper (6) einmündet.

4. Hydraulikaggregat nach Anspruch 1, **dadurch gekennzeichnet, dass** die Drucksensoraufnahmebohrung (7) radial beabstandet zur Speicheraufnahmebohrung (8) oberhalb der Speicheraufnahmebohrung angeordnet ist.

5. Hydraulikaggregat nach Anspruch 1, **dadurch gekennzeichnet, dass** die Drucksensoraufnahmebohrung (7) mit dem zum Bremsdruckgeberanschluss (B1, B2) führenden Druckmittelkanal (5) verbunden ist, der in die Mantelfläche der Ventilaufnahmebohrung (3) einmündet, welche für das Umschaltventil vorgesehen ist.

6. Hydraulikaggregat nach Anspruch 1, **dadurch gekennzeichnet, dass** zur Aufnahme eines Elektrosteckers im Aufnahmekörper (6) direkt neben der Speicher- und Drucksensoraufnahmebohrung (8, 7) ein Durchgang (9) vorgesehen ist, der unmittelbar neben der Ventilaufnahmebohrung (10) angeordnet ist, die für das Trennventil vorgesehen ist.

7. Hydraulikaggregat nach Anspruch 1, **dadurch gekennzeichnet, dass** die erste Ventilreihe (X) unmittelbar zwischen der zweiten Ventilreihe (Y) und den Rad- und Bremsdruckgeberanschlüssen (R1, R2, R3, R4, B1, B2) angeordnet ist, wobei die erste Ventilreihe (X) ausschließlich die Einlassventile und die zweite Ventilreihe (Y) ausschließlich die Auslassventile aufnimmt.

8. Hydraulikaggregat nach Anspruch 1, **dadurch gekennzeichnet, dass** die zweite Ventilreihe (Y) unmittelbar zwischen der ersten Ventilreihe (X) und den Ventilaufnahmebohrungen (3) der dritten Ventilreihe (Z) angeordnet sind, welche das elektrische Umschaltventil und das Trennventil aufweisen.

9. Hydraulikaggregat für eine Kraftwagen-Zweikreisbremsanlage nach einem der vorangegangenen Ansprüche, **dadurch gekennzeichnet, dass** zur individuellen Fahrdynamikregelung an allen Radbremsen die dritte Ventilreihe (Z) vier Ventilaufnahmebohrungen (3, 10) für zwei Trenn- sowie zwei Umschaltventile aufweist, wobei die für die beiden Trennventile vorgesehenen Ventilaufnahmebohrungen (10) zwischen den für die Umschaltventile vorgesehenen Ventilaufnahmebohrungen (3) angeordnet sind, die aus der Ventilreihe (Z) in Richtung der Pumpenbohrung (4) versetzt sind.

10. Hydraulikaggregat für eine Kraftwagen-Zweikreisbremsanlage nach Anspruch 10, **dadurch gekennzeichnet, dass** zum Anschluss des Hydraulikaggregats an die Radbremsen vier Radbremsanschlüsse (R1, R2, R3, R4) parallel in einer Reihe angeordnet sind, die parallel zu den beiden Bremsdruckgeberanschlüssen (B1, B2) in eine Seitenfläche des Aufnahmekörpers (6) einmünden, welche die Bremsdruckgeberanschlüsse (B1, B2) aufweist.

## Claims

1. Hydraulic unit for slip-controlled brake systems,
- having a receiving body (6) which receives inlet and outlet valves in a plurality of valve receiving bores (1, 2) of a first and second valve row (X, Y),
- having a pump receiving bore (4) which is arranged in the receiving body (6) outside the two valve rows (X, Y) and is directed transversely with respect to the opening direction of the valve receiving bores (1, 2) into the receiving body (6),
- having a motor receiving bore (11) which is arranged in the receiving body (6) outside the two valve rows (X, Y) and is directed perpendicularly onto the pump receiving bore (4),
- having an accumulator receiving bore (8) which opens into the receiving body (6) outside the two valve rows (X, Y),
- having a plurality of pressure-medium ducts (5, 14) which connect the valve, pump and accumulator receiving bores (1, 2, 4, 8) and are capable of producing a hydraulic connection between brake-pressure sensor connectors (B1, B2) and a plurality of wheel-brake connectors (R1, R2, R3, R4),
- and having a plurality of valve receiving bores (3) which are arranged in a third valve row (Z) for receiving a separating valve and an electric switchover valve which is arranged between one of the brake-pressure sensor connectors (B1, B2) and the suction side of a pump, the valve receiving bore (3) which is provided for receiving the electric switchover valve is arranged in the plane of the pump receiving bore (4),
**characterized in that** the valve receiving bore (3) which is provided for receiving the electric switchover valve is arranged between the second valve row (Y) and a pressure-sensor receiving bore (7) which opens into the receiving body (6) in an axially parallel manner with respect to the valve receiving bores of the three valve rows (X, Y, Z), and **in that** the pressure-sensor receiving bore (7) is arranged so as to be flush in the plane of those valve receiving bores (1, 2, 3) which are situated in the three valve rows (X, Y, Z) in each case at the outer end of the valve rows (X, Y, Z).

2. Hydraulic unit according to Claim 1, **characterized in that**, within the plane of the pump receiving bore (4), the bottom of the valve receiving bore (3) which is provided for receiving the electric switchover valve has a hydraulic connection to the suction-side region of the pump receiving bore (3).

3. Hydraulic unit according to Claim 1 or 2, **characterized in that** the circumferential face of the valve receiving bore (3) which is provided for receiving the electric switchover valve is connected via a pressure-medium duct (5) to the brake-pressure sensor connector (B1, B2) which opens into the receiving body (6) transversely with respect to the three valve rows (X, Y, Z).

4. Hydraulic unit according to Claim 1, **characterized in that** the pressure-sensor receiving bore (7) is arranged above the accumulator receiving bore such that it is spaced apart radially from the accumulator receiving bore (8).

5. Hydraulic unit according to Claim 1, **characterized in that** the pressure-sensor receiving bore (7) is connected to the pressure-medium duct (5) which leads to the brake-pressure sensor connector (B1, B2) and opens into the circumferential face of the valve receiving bore (3) which is provided for the switchover valve.

6. Hydraulic unit according to Claim 1, **characterized in that** a passage (9) for receiving an electric plug is provided in the receiving body (6) directly next to the accumulator and pressure-sensor receiving bore (8, 7), which passage (9) is arranged immediately next to the valve receiving bore (10) which is provided for the separating valve.

7. Hydraulic unit according to Claim 1, **characterized in that** the first valve row (X) is arranged immediately between the second valve row (Y) and the wheel and brake-pressure sensor connectors (R1, R2, R3, R4, B1, B2), the first valve row (X) receiving exclusively the inlet valves and the second valve row (Y) receiving exclusively the outlet valves.

8. Hydraulic unit according to Claim 1, **characterized in that** the second valve row (Y) is arranged immediately between the first valve row (X) and the valve receiving bores (3) of the third valve row (Z) which have the electric switchover valve and the separating valve.

9. Hydraulic unit for a motor-vehicle dual-circuit brake system according to one of the preceding claims, **characterized in that** the third valve row (Z) has four valve receiving bores (3, 10) for two separating valves and two switchover valves for individual driving-dynamics regulation at all wheel brakes, the valve receiving bores (10) which are provided for the two separating valves being arranged between the valve receiving bores (3) which are provided for the switchover valves and are offset out of the valve row (Z) in the direction of the pump bore (4).

10. Hydraulic unit for a motor-vehicle dual-circuit brake system according to Claim 10, **characterized in that**, in order to connect the hydraulic unit to the wheel brakes, four wheel-brake connectors (R1, R2, R3, R4) are arranged in parallel in a row, which wheel-brake connectors (R1, R2, R3, R4) open parallel to the two brake-pressure sensor connectors (B1, B2) into a side face of the receiving body (6), which side face has the brake-pressure sensor connectors (B1, B2).

## Revendications

1. Unité hydraulique pour systèmes de freinage à régulation antipatinage,
- comprenant un corps de réception (6) qui reçoit des soupapes d'admission et d'évacuation dans plusieurs alésages de réception de soupape (1, 2) d'une première et d'une deuxième rangée de soupapes (X, Y),
- comprenant un alésage de réception de pompe (4) disposé dans le corps de réception (6) à l'extérieur par rapport aux deux rangées de soupapes (X, Y), lequel alésage de réception de pompe est orienté transversalement par rapport à la direction dans laquelle les alésages de réception de soupape (1, 2) débouchent dans le corps de réception (6),
- comprenant un alésage de réception de moteur (11) disposé à l'extérieur par rapport aux deux rangées de soupapes (X, Y) dans le corps de réception (6), lequel alésage de réception de moteur est orienté perpendiculairement à l'alésage de réception de pompe (4),
- comprenant un alésage de réception d'accumulateur (8) débouchant à l'extérieur par rapport aux deux rangées de soupapes (X, Y) dans le corps de réception (6),
- comprenant plusieurs conduits de fluide sous pression (5, 14) reliant les alésages de réception de soupape, de pompe et d'accumulateur (1, 2, 4, 8), lesquels conduits de fluide sous pression sont à même de réaliser une liaison hydraulique entre des raccords de générateur de pression de frein (B1, B2) et plusieurs raccords de frein de roue (R1, R2, R3, R4)
- et comprenant plusieurs alésages de réception de soupape (3), disposés dans une troisième rangée de soupapes (Z), pour la réception d'une soupape de séparation et d'une soupape d'inversion électrique qui est disposée entre l'un des raccords de générateur de pression de frein (B1, B2) et le côté aspiration d'une pompe, l'alésage de réception de soupape (3) prévu pour la réception de la soupape d'inversion électrique étant disposé dans le plan de l'alésage de réception de pompe (4),
**caractérisée en ce que** l'alésage de réception de soupape (3) prévu pour la réception de la soupape d'inversion électrique est disposé entre la deuxième rangée de soupapes (Y) et un alésage de réception de capteur de pression (7) qui débouche dans le corps de réception (6) avec son axe parallèle à ceux des alésages de réception de soupape des trois rangées de soupapes (X, Y, Z), et **en ce que** l'alésage de réception de capteur de pression (7) est disposé en affleurement dans le plan des alésages de réception de soupape (1, 2, 3) qui se trouvent à l'extrémité extérieure respective des rangées de soupapes (X, Y, Z) dans les trois rangées de soupapes (X, Y, Z).

2. Unité hydraulique selon la revendication 1, **caractérisée en ce que** le fond de l'alésage de réception de soupape (3), prévu pour la réception de la soupape d'inversion électrique, à l'intérieur du plan de l'alésage de réception de pompe (4) comprend une liaison hydraulique à la région côté aspiration de l'alésage de réception de pompe (3).

3. Unité hydraulique selon la revendication 1 ou 2, **caractérisée en ce que** la surface extérieure de l'alésage de réception de soupape (3) prévu pour la réception de la soupape d'inversion électrique est reliée, par le biais d'un conduit de fluide sous pression (5), au raccord de générateur de pression de frein (B1, B2) qui débouche transversalement par rapport aux trois rangées de soupapes (X, Y, Z) dans le corps de réception (6).

4. Unité hydraulique selon la revendication 1, **caractérisée en ce que** l'alésage de réception de capteur de pression (7) est disposé au-dessus de l'alésage de réception d'accumulateur de manière espacée radialement par rapport à l'alésage de réception d'accumulateur (8).

5. Unité hydraulique selon la revendication 1, **caractérisée en ce que** l'alésage de réception de capteur de pression (7) est relié au conduit de fluide sous pression (5) menant jusqu'au raccord de générateur de pression de frein (B1, B2), lequel conduit de fluide sous pression débouche dans la surface extérieure de l'alésage de réception de soupape (3) qui est prévu pour la soupape d'inversion.

6. Unité hydraulique selon la revendication 1, **caractérisée en ce qu'**un passage (9) est prévu à proximité immédiate de l'alésage de réception d'accumulateur et de capteur de pression (8, 7) pour la réception d'un connecteur électrique dans le corps de réception (6), lequel passage est disposé à proximité immédiate de l'alésage de réception de soupape (10) qui est prévu pour la soupape de séparation.

7. Unité hydraulique selon la revendication 1, **caractérisée en ce que** la première rangée de soupapes (X) est disposée directement entre la deuxième rangée de soupapes (Y) et les raccords de générateur de pression de frein et de frein de roue (R1, R2, R3, R4, B1, B2), la première rangée de soupapes (X) recevant exclusivement les soupapes d'admission et la deuxième rangée de soupapes (Y) recevant exclusivement les soupapes d'évacuation.

8. Unité hydraulique selon la revendication 1, **caractérisée en ce que** la deuxième rangée de soupapes (Y) est disposée directement entre la première rangée de soupapes (X) et les alésages de réception de soupape (3) de la troisième rangée de soupapes (Z) qui comprennent la soupape d'inversion électrique et la soupape de séparation.

9. Unité hydraulique pour un système de freinage à deux circuits de véhicule automobile selon l'une quelconque des revendications précédentes, **caractérisée en ce que** la troisième rangée de soupapes (Z) comprend quatre alésages de réception de soupape (3, 10) pour deux soupapes de séparation ainsi que pour deux soupapes d'inversion en vue d'une régulation individuelle de la dynamique de conduite au niveau de tous les freins de roue, les alésages de réception de soupape (10) prévus pour les deux soupapes de séparation étant disposés entre les alésages de réception de soupape (3) prévus pour les soupapes d'inversion, lesquels alésages de réception de soupape (3) sont décalés par rapport à la rangée de soupapes (Z) en direction de l'alésage de pompe (4).

10. Unité hydraulique pour un système de freinage à deux circuits de véhicule automobile selon la revendication 10, **caractérisée en ce que** quatre raccords de frein de roue (R1, R2, R3, R4) sont disposés parallèlement en une rangée pour le raccordement de l'unité hydraulique aux freins de roue, lesquels raccords de frein de roue débouchent dans une surface latérale du corps de réception (6) parallèlement aux deux raccords de générateur de pression de frein (B1, B2), laquelle surface latérale comprend les raccords de générateur de pression de frein (B1, B2).
